# EUROPÄISCHE PATENTSCHRIFT

(11) **EP 4 409 680 B1**
(45) Veröffentlichungstag und Bekanntmachung des Hinweises auf die Patenterteilung: **02.04.2025**
(21) Anmeldenummer: 22786762.9
(22) Anmeldetag: 12.09.2022
(51) Int. Cl.: H01M 50/358

(54) **BATTERIEANORDNUNG MIT EINEM ZELLENTGASUNGSKANAL, KRAFTFAHRZEUG UND VERFAHREN ZUM ABFÜHREN VON GASEN AUS EINER BATTERIE**
BATTERY ASSEMBLY HAVING A CELL DEGASSING CHANNEL, MOTOR VEHICLE, AND METHOD FOR DISCHARGING GASES FROM A BATTERY
ENSEMBLE BATTERIE DOTÉ D'UN CANAL DE DÉGAZAGE DE CELLULE, VÉHICULE AUTOMOBILE ET PROCÉDÉ D'ÉVACUATION DE GAZ D'UNE BATTERIE

(30) Priorität: 29.09.2021 DE 102021125191
(43) Veröffentlichungstag der Anmeldung: 07.08.2024
(73) Patentinhaber: AUDI AG, 85057 Ingolstadt (DE)
(72) Erfinder: LORENZ, Carsten, 85084 Reichertshofen (DE); SCHNEIDER, Paul, 85098 Großmehring (DE); SCHÜSSLER, Martin, 85092 Kösching (DE)
(86) Internationale Anmeldenummer: PCT/EP2022/075232
(87) Internationale Veröffentlichungsnummer: WO 2023/052106

(56) Entgegenhaltungen:
- EP-A1- 3 817 086
- EP-A1- 3 817 086
- US-A1- 2021 066 690
- US-A1- 2021 066 690

## Beschreibung

Die Erfindung betrifft eine Batterieanordnung mit einer Batterie und einem Zellentgasungskanal zum Abführen von Gasen aus der Batterie, die mindestens eine Batteriezelle umfasst, wobei der Zellentgasungskanal eine Kammer aufweist, die derart ausgestaltet ist, dass ein aus der mindestens einen Batteriezelle austretendes Gas in diese einleitbar ist und durch diese entlang zumindest eines Gasabführpfads zu mindestens einer Austrittsöffnung der Kammer durchführbar ist. Des Weiteren betrifft die Erfindung auch ein Kraftfahrzeug mit einer solchen Batterieanordnung und ein Verfahren zum Ableiten von Gasen aus einer Batterie.

Batterien, insbesondere Hochvoltbatterien, für Elektro- oder Hybridfahrzeuge sind aus dem Stand der Technik bekannt. Solche Hochvoltbatterien weisen dabei typischerweise eine Vielzahl von Batteriezellen auf, die unter Umständen auch zu Zellmodulen zusammengefasst sein können. Im Falle eines Defekts einer Batteriezelle, zum Beispiel bei einem Kurzschluss, besteht die Gefahr, dass eine solche Batteriezelle thermisch durchgeht. Im Falle eines solchen thermischen Durchgehens gast die Batteriezelle typischerweise aus, wobei auch Partikel aus der Zelle vom Gasstrom mitgerissen werden. Um ein definiertes Ausgasen einer Batteriezelle zu ermöglichen, weisen die Batteriezellen typischerweise freigebbare Entgasungsöffnungen in Form von zum Beispiel Berstmembranen auf. Damit sich die beim Ausgasen einer Zelle austretenden Partikel nicht unkontrolliert im Batteriesystem ablagern können, was zur Blockade von Strömungsquerschnitten und zum Kurzschluss von andern Zellen innerhalb der Batterie führen kann, sollte das aus den Zellen austretende Gas kontrolliert abtransportiert werden, zum Beispiel über einen Zellentgasungskanal. Ein weiteres Problem besteht zudem darin, dass sich die Gase beim Austritt aus dem Batteriesystem, zum Beispiel abgeführt über den genannten Zellentgasungskanal, selbst entzünden können. Dies liegt zum einen an der hohen Gastemperatur und zum anderen wiederum an den im Gas enthaltenen heißen Partikeln. Entsprechend wäre es wünschenswert, die Austrittstemperatur eines solchen Schadgases und der darin enthaltenen Partikel so weit reduzieren zu können, dass das Austreten einer Flamme aus dem Batteriesystem beziehungsweise eine Selbstentzündung des Gases außerhalb der Batterie beziehungsweise des Kraftfahrzeugs ausgeschlossen werden kann.

Hierzu beschreibt die DE 10 2011 105 981 A1 ein Lithium-Ionen-Batteriedefektverhinderungssystem, gemäß welchem das Batteriezellengas in dem Verbrennungsmotor-Abgassystem behandelt wird. Um das Batterieabgas dem Abgassystem zuzuführen, sind unter anderem ein Gebläse oder Luftpumpe erforderlich. Die Probleme bei derartigen aktiven Elementen bestehen vor allem darin, dass im Falle eines Unfalls eines Kraftfahrzeugs deren Funktionsweise nicht gewährleistet werden kann. Sind diese defekt beziehungsweise in ihrer Funktionsweise beeinträchtigt, so kann das Batteriegas nicht ordnungsgemäß abgeführt werden, was fatale Folgen haben kann.

Weiterhin beschreibt die DE 10 2018 125 446 A1 ein Batteriegehäuse zur Aufnahme eines oder mehrerer Batteriemodule mit einem Gehäuseabschnitt zur teilweisen Begrenzung des Gehäuseinnenraums, wobei der Gehäuseabschnitt einen integrierten Abgaskanal zum Ableiten von Medien aufweist, die bei einem Defekt eines Batteriemoduls aus diesem austreten. Der Abgaskanal weist dabei zumindest einen Umlenkbereich auf, der dazu ausgebildet ist, die Transportrichtung der Medien zu ändern. Durch die Umlenkung findet eine Verlangsamung etwaiger mitgerissener Partikel statt. So sollen zum Beispiel Funken, die das Abgas entzünden können, daran gehindert, das Batteriegehäuse zu verlassen.

Die EP 3 817 086 A1 und die US 2021/066690 A1 beschreiben Batterieanordnungen mit einer Batterie und einem Zellentgasungskanal zum Abführen von Gasen aus der Batterie.

Nichtsdestoweniger besteht weiterhin das Bestreben, die Abführung von Schadgasen aus einer Batterie noch effizienter und sicherer zu gestalten.

Aufgabe der vorliegenden Erfindung ist es daher, eine Batterieanordnung, ein Kraftfahrzeug und ein Verfahren bereitzustellen, die ein möglichst effizientes und sicheres Abführen von Schadgasen aus einer Batterie ermöglichen.

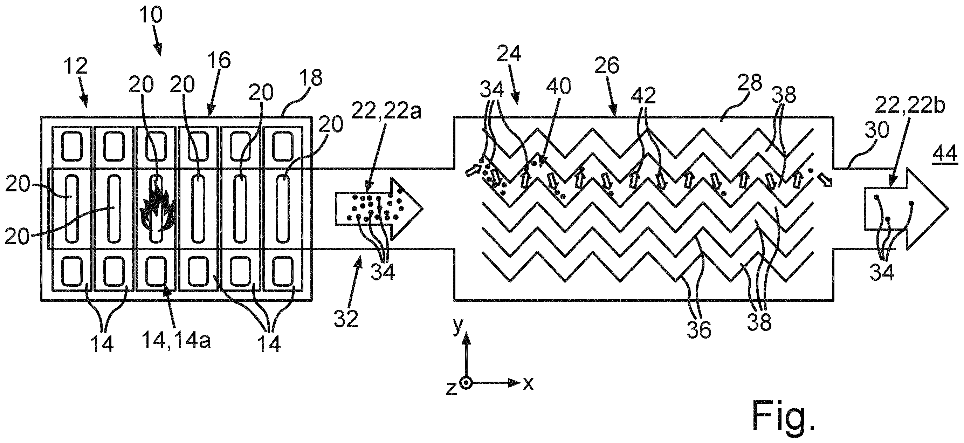

Diese Aufgabe wird gelöst durch eine Batterieanordnung, durch ein Kraftfahrzeug und durch ein Verfahren mit den Merkmalen gemäß den jeweiligen unabhängigen Patentansprüchen. Vorteilhafte Ausgestaltungen der Erfindung sind Gegenstand der abhängigen Patentansprüche, der Beschreibung sowie der Figur.

Eine erfindungsgemäße Batterieanordnung entsprechend dem vorliegenden Anspruch 1 weist eine Batterie und einen Zellentgasungskanal zum Abführen von Gasen aus der Batterie auf, die mindestens eine Batteriezelle umfasst, wobei der Zellentgasungskanal eine Kammer aufweist, die derart ausgestaltet ist, dass ein aus der mindestens einen Batteriezelle austretendes Gas in diese einleitbar ist und durch diese entlang zumindest eines Gasabführpfads zu mindestens einer Austrittsöffnung der Kammer durchführbar ist. Dabei weist die Kammer mindestens eine in einem Innenraum der Kammer angeordnete, in einer Hauptverlaufsrichtung, die zu einer ersten Richtung korrespondiert, nicht geradlinig verlaufende Gaslenkstruktur auf, die so ausgebildet ist, dass der zumindest eine Gasabführpfad in seinem Verlauf in Hauptverlaufsrichtung einen mehrfachen Richtungswechsel bezüglich einer zweiten zur ersten senkrechten Richtung aufweist.

Eine solche Gaslenkstruktur bewerkstelligt es also, dass der Gasabführpfad, entlang von welchem die Kammer durchströmendes Gas zur Austrittsöffnung der Kammer geführt werden kann, nicht geradlinig verläuft, sondern wie beschrieben mehrfach umgelenkt wird, insbesondere bezüglich einer zur Hauptverlaufsrichtung senkrechten Richtung. Der Gasabführpfad kann also beispielsweise schlangenförmig, zick-zack-förmig, wellenförmig oder mäanderförmig verlaufen. Mit anderen Worten breitet sich das Gas entlang dieses Gasabführpfads zwar in Hauptverlaufsrichtung aus, wird dabei jedoch entlang einer kurvigen beziehungsweise zick-zack-förmigen Bahn gelenkt. Dadurch lassen sich gleichzeitig mehrere große Vorteile erzielen: Zum einen entsteht hierdurch große Reibung zwischen dem geführten Gas und der Gaslenkstruktur, was dazu führt, dass sich die Gaslenkstruktur durch das geführte Gas erwärmt. Entsprechend kühlt sich auch die Temperatur des Gases ab. Durch die Reibung wird das entlangströmende Gas zusätzlich abgebremst und verlangsamt. Auch dies führt wiederum zu einer zusätzlichen Abkühlung des Gases. Als weiterer sehr positiver Nebeneffekt werden durch den ständigen Kontakt mit der Gaslenkstruktur Partikel im Gas abgeschieden. Dies hat zum Ergebnis, dass das aus der Austrittsöffnung austretende Gas letztendlich deutlich abgekühlt ist und deutlich weniger Partikel aufweist, sodass insgesamt die Gefahr einer Entzündung des austretenden Gases enorm reduziert ist beziehungsweise sogar ausgeschlossen werden kann. Ein weiterer besonders großer Vorteil besteht jedoch gerade darin, dass eine solche Gaslenkung nicht durch einen einzelnen großen Kanal, der mehrfach umgelenkt oder gewunden ist, bereitgestellt wird, sondern stattdessen durch mindestens eine Gaslenkstruktur, die innerhalb einer Kammer angeordnet ist. Diese separiert den Innenraum der Kammer somit zumindest bereichsweise in zumindest zwei Teilräume. Sind mehr solcher Gaslenkstrukturen vorgesehen, wie dies später näher erläutert wird, so kann der Innenraum sogar in vielzählige einzelne räumlich zum Großteil voneinander separierte Strömungskanäle gegliedert werden. Ein einzelner solcher Strömungskanal beziehungsweise Gasabführpfad kann dadurch deutlich enger gestaltet werden, was wiederum die Partikelabscheidung, die Reduktion der Strömungsgeschwindigkeit sowie die Abkühlung des Gases fördert. Gleichzeitig kann durch den Innenraum dennoch ein sehr großes Gesamtvolumen bereitgestellt werden und das in die Kammer eingeleitete Gas kann sich beispielsweise auf die einzelnen Teilräume aufteilen. Ein großes Gesamtvolumen ist enorm von Vorteil, da dies einerseits den Effekt hat, dass das Gas beim Eintritt in dieses große Gesamtvolumen expandiert und dadurch abkühlt. Andererseits kann auch ein Verstopfen von Engstellen durch vermehrte Partikelabscheidung effizient verhindert werden. Dadurch lassen sich die Sicherheit und Effizienz der Gasabführung zusätzlich noch weiter steigern. Durch die Integration mindestens einer Gaslenkstruktur in den Innenraum der Kammer, insbesondere durch die Integration mehrerer solcher Gaslenkstrukturen in den Innenraum der Kammer, lässt sich zudem insgesamt das Verhältnis zwischen vom Gaststrom berührbare Wandfläche zu Innenraumvolumen deutlich vergrößern, wobei zur Wandfläche nicht nur die Kammerwände beitragen, sondern auch die Gaslenkstrukturen. Dadurch ist die Kontaktfläche, die das Gas beim Durchströmen der Kammer kontaktiert, maximiert, wodurch eine maximale Partikelabscheidung, Geschwindigkeitsreduktion und Abbremsung sowie Temperaturerniedrigung bewirkt werden kann. Zudem ist durch das Vorsehen der Gaslenkstrukturen insgesamt mehr Masse bereitgestellt, die thermische Energie aufnehmen kann. Auch hierdurch kann die Effizienz bei der Gasabkühlung gesteigert werden.

Die Kammer kann sozusagen als eine Art Funkenfalle ausgebildet sein. Bei herkömmlichen Funkenfallen, die z.B. für Schweißanlagen verwendet werden, wird der Effekt genutzt, dass in einer solchen Falle Funken abgefangen werden können, die somit nicht am anderen Ende austreten können. Beim Einsatz einer solchen Funkenfalle in einer Batterieanordnung ist diese Funktion jedoch weniger nützlich, da das aus einer Zelle ausströmende Gas ohnehin keine Funken umfasst. Vielmehr beruht die Erfindung auf der zusätzlichen Erkenntnis, dass durch eine solche Funkenfalle auch im Zusammenhang mit ausgasenden Batteriezellen vorteilhafte Effekte erzielt werden können, vor allem durch eine solche Funkenfalle nicht nur eine Partikelabscheidung sondern vor allem auch eine Abbremsung und Abkühlung eines aus einer Batteriezelle austretenden Gases erreicht werden kann.

Im Allgemeinen soll im Rahmen der Erfindung, wenn von einem Gas die Rede ist, immer ein aus der mindestens einen Batteriezelle austretendes oder ausgetretenes Gas verstanden werden, zum Beispiel im Zuge eines Defekts der Batteriezelle beziehungsweise eines thermischen Durchgehens der Batteriezelle. Bei der Batterie kann es sich beispielsweise um eine eingangs beschriebene Hochvoltbatterie handeln. Diese kann nicht nur eine einzelne Batteriezelle umfassen, sondern beispielsweise auch mehrere Batteriezellen, insbesondere vielzählige Batteriezellen. Diese können zum Beispiel als Rundzellen, prismatische Zellen oder Pouchzellen ausgebildet sein. Weiterhin ist die mindestens eine Batteriezelle zum Beispiel als eine Lithium-Ionen-Zelle ausgebildet. Umfasst die Batterie mehrere Batteriezellen, können dies optional auch zu Batteriemodulen zusammengefasst sein. Mit anderen Worten kann die Batterie mehrere Batteriemodule mit jeweils mehreren Batteriezellen umfassen. Der beschriebene Zellentgasungskanal mit der Kammer kann dabei pro Batteriezelle oder pro Batteriemodul oder auch für die Gesamtbatterie bereitgestellt sein. Mit anderen Worten kann die Batterie nur einen Zellentgasungskanal mit einer solchen Kammer aufweisen, in welche die Gase aller eventuell entgasenden Zellen der Batterie eingeleitet werden. Alternativ kann die Batterie aber auch mehrere Zellentgasungskanäle mit jeweiligen solchen Kammern aufweisen, zum Beispiel pro Batteriemodul oder sogar pro Batteriezelle. Denkbar ist es auch, dass für mehrere Batteriezellen und/oder Batteriemodule ein gemeinsamer Zellentgasungskanal genutzt wird, dieser jedoch mehrere solcher Kammern aufweist, z.B. eine pro Modul oder pro Zelle. Weiterhin ist es denkbar, dass die Batteriezelle in Bezug auf die Kammer so angeordnet ist, dass das aus einer der Batteriezelle zugeordneten, freigebbaren Entgasungsöffnung austretende Gas direkt in die Kammer einleitbar ist oder alternativ indirekt über einen zusätzlichen Entgasungskanalabschnitt. Auch bezüglich der Anordnung der Kammer in Bezug auf die Batteriezelle beziehungsweise die Batterie gibt es vielzählige Möglichkeiten, denen im Prinzip keine Grenzen gesetzt sind.

Die Kammer kann weiterhin Kammerwände aufweisen, die den Innenraum der Kammer begrenzen. In diesen Kammerwänden kann zum einen mindestens eine zumindest freigebbare Eintrittsöffnung vorgesehen sein, durch welche das aus der mindestens einen Batteriezelle austretende Gas eintreten kann. Unter einer zumindest freigebbaren Eintrittsöffnung soll dabei insbesondere eine Öffnung verstanden werden, die entweder permanent geöffnet sein kann, zum Beispiel in der Art eines Lochs oder Durchbruchs, oder die im Normalbetrieb verschlossen ist und unter bestimmten Bedingungen erst freigegeben wird, zum Beispiel bei Überdruck, ähnlich einem Überdruckventil oder einer durch eine Berstmembran verschlossene Öffnung. Dabei kann die Kammer nur eine solche zumindest freigebbare Eintrittsöffnung aufweisen oder auch mehrere. Im Falle mehrerer solcher freigebbaren Eintrittsöffnungen können diese zum Beispiel jeweiligen Zellen und/oder Batteriemodulen zugeordnet sein. Auch die Austrittsöffnung der Kammer kann im Normalbetrieb zum Beispiel verschlossen oder mit einem Verschluss ausgeführt sein, zum Beispiel ebenfalls mit einer Berstmembran. Oder die Austrittsöffnung kann als permanente Öffnung der Kammer ausgestaltet sein. Auch hier ist es denkbar, dass die Kammer nicht nur eine Austrittsöffnung, sondern beispielsweise auch mehrere aufweist. Da die Gaslenkstruktur die Kammer in Teilbereiche gliedert, ist es beispielsweise auch denkbar, dass einem jeweiligen Gaslenkpfad eine solche Austrittsöffnung zugeordnet ist. Nichtsdestoweniger kann das die Kammer durchströmende Gas, insbesondere auch entlang unterschiedlicher Gasabführpfade strömende Gas, zu einer gemeinsamen Austrittsöffnung der Kammer gelenkt werden.

Dass der Gasabführpfad in seinem Verlauf in Hauptverlaufsrichtung einen mehrfachen Richtungswechsel bezüglich einer zweiten zur ersten Richtung aufweist, bewirkt vorzugsweise, dass ein entlang dieses Gasabführpfads strömendes Gas, zumindest im Mittel, immer eine in Hauptverlaufsrichtung weisende Geschwindigkeitskomponente aufweist, die insbesondere im Verlauf kleiner wird, sowie eine Geschwindigkeitskomponente senkrecht zur Hauptverlaufsrichtung, die wiederholt ihr Vorzeichen wechselt, das heißt also in die zweite Richtung weist, und dann nach Umlenkung entgegen die zweite Richtung gerichtet ist, und dann nach erneuter Umlenkung wieder in die zweite Richtung gerichtet ist, und so weiter.

Vorzugsweise ist die mindestens eine Gaslenkstruktur, insbesondere die mehreren Gaslenkstrukturen, so ausgebildet, dass sich der mindestens eine Gasabführpfad nicht in eine Sackgasse verzweigt. Mit anderen Worten soll durch die mindestens eine oder durch die mehreren Gaslenkstrukturen keine Sackgassen gebildet sein. Dies beruht auf der Erkenntnis, dass Sackgassen im Gasabführpfad zu einem Gasrückstau führen, der einerseits das Zusetzen von Engstellen durch sich ablagernde Partikel fördert und damit eine komplette Blockade von Teilen eines Gasabführpfads, und andererseits dazu führen, dass eine solche Sackgasse durch das sich rückstauende Gas von nachströmendem Gas ohnehin einfach überströmt wird und damit im weiteren Verlauf wirkungslos bleibt.

Besonders vorteilhaft ist es dabei, wenn die mindestens eine Gaslenkstruktur in Hauptverlaufsrichtung zick-zack-förmig oder wellenförmig verläuft. Vor allem eine zick-zack-förmige Struktur hat sich dabei als besonders effizient und vorteilhaft erwiesen. Eine solche Zick-Zack-Struktur weist im Gegensatz zu einem wellenförmigen Verlauf einen deutlich abrupteren Wechsel der Verlaufsrichtung an den Umkehrpunkten auf. Dies überträgt sich analog auf den Gasabführpfad. Auch dieser kann entsprechend durch die Gaslenkstruktur derart in seinem Verlauf gestaltet werden, dass dieser in Hauptverlaufsrichtung zick-zack-förmig oder wellenförmig verläuft. Dadurch lassen sich oben genannte Effekte auf besonders einfache und effiziente Weise erzielen. Die Gaslenkstruktur kann dabei in Art einer zick-zack-förmigen oder wellenförmig verlaufenden Trennwand ausgebildet sein. Diese kann sich im Übrigen von einer Kammerwand bis zur gegenüberliegenden Kammerwand durchgehend erstrecken, insbesondere bezüglich einer dritten Richtung, oder aber auch von den Kammerwänden beabstandet sein. Entsprechend kann auch eine Halterung vorgesehen sein, um die Gaslenkstruktur, sollte diese nicht direkt an eine Kammerwand angebunden sein, zu halten. Eine solche Halterung kann dann entsprechend an einer oder mehreren Kammerwänden angeordnet sein. Weiterhin kann die mindestens eine Gaslenkstruktur in einer dritten Richtung, die zur ersten und zweiten Richtung senkrecht ist, gerade verlaufend ausgebildet sein. Mit anderen Worten kann die Gaslenkstruktur in der dritten Richtung hinsichtlich ihrer geometrischen Ausbildung translationsinvariant ausgebildet sein. Beispielsweise kann die Gaslenkstruktur so ausgeführt sein, dass sie in jedem Querschnitt senkrecht zur dritten Richtung eine gleiche geometrische Ausbildung aufweist. Die Gaslenkstruktur kann also beispielsweise in Art eines Wellblechs oder zick-zack-förmig strukturierten Blechs ausgebildet sein. Die geradlinige Ausbildung in der dritten Richtung ermöglicht eine besonders einfache Herstellung der Gaslenkstruktur und zudem soll eine Gasabbremsung vornehmlich in Hauptverlaufsrichtung erfolgen. Entsprechend ist es vorteilhaft, wenn die mindestens eine Austrittsöffnung der Kammer und mindestens eine freigebbar Eintrittsöffnung der Kammer in unterschiedlichen Hälften der Kammer bezüglich dieser ersten Richtung angeordnet sind. Dies führt dazu, dass sich das entlang des zumindest einen Gasabführpfads ausbreitende Gas in Hauptverlaufsrichtung ausbreitet und damit effizient abgekühlt und abgebremst wird, insbesondere durch die in Hauptverlaufsrichtung variierende Gaslenkstruktur. Die Geschwindigkeitskomponente des Gases in der dritten Richtung, in welcher die Gaslenkstruktur geradlinig ausgebildet ist, ist somit relativ gering und zumindest im Mittel näherungsweise Null.

Erfindungsgemäß weist die Kammer im Innenraum mehrere Gaslenkstrukturen umfassend die mindestens eine Gaslenkstruktur auf, wobei die mehreren Gaslenkstrukturen in der Hauptverlaufsrichtung nicht geradlinig verlaufen, sodass zwischen je zwei in der zweiten Richtung benachbart angeordneten Gaslenkstrukturen der mehreren Gaslenkstrukturen ein Gasabführpfad bereitgestellt ist, der in seinem Verlauf in Hauptverlaufsrichtung einen mehrfachen Richtungswechsel bezüglich einer zweiten zur ersten senkrechten Richtung aufweist. Bevorzugt weist die Kammer derart viele Gaslenkstrukturen auf, dass auch mehrere zumindest bereichsweise durch die Gaslenkstrukturen separierte Gasabführpfade bereitgestellt sind. Diese verlaufen also zwischen je zwei benachbarten angeordneten Gaslenkstrukturen. Dadurch kann der gesamte Innenraum der Kammer in mehrere Gasabführpfade gegliedert werden. Dies erlaubt eine engere Ausgestaltung der jeweiligen Gasabführpfade, was wiederum eine effizienter Abkühlung, Geschwindigkeitsreduzierung und Partikelabscheidung ermöglicht, bei gleichzeitiger Beibehaltung eines möglichst großen Gesamtvolumens.

Dabei können die jeweiligen mehreren Gaslenkstrukturen wie zur mindestens einen Gaslenkstruktur bereits beschrieben ausgebildet sein, das heißt also zum Beispiel ebenfalls zick-zack-förmig oder wellenförmig in Hauptverlaufsrichtung verlaufen.

Dabei ist es weiterhin sehr vorteilhaft, wenn die mehreren Gaslenkstrukturen gleichartig ausgebildet und parallel zueinander angeordnet sind. Dies erlaubt entsprechend auch die Ausbildung mehrerer Gasabführpfade, die ebenfalls parallel zueinander in Hauptverlaufsrichtung verlaufen, insbesondere zick-zack-förmig oder wellenförmig. Dies erlaubt eine äußerst kompakte Ausbildung der Kammer.

Bei einer besonders vorteilhaften Ausgestaltung der Erfindung ist die mindestens eine Gaslenkstruktur aus einem metallischen Werkstoff ausgebildet. Beispielsweise kann die mindestens eine Gaslenkstruktur aus Aluminium und/oder Stahl und/oder Kupfer gebildet sein. Denkbar ist es auch, die verschiedenen Gaslenkstrukturen aus unterschiedlichen Materialien zu fertigen. Metallische Werkstoffe haben dabei im Allgemeinen den großen Vorteil, dass diese sehr schnell Wärme aufnehmen können. Weiterhin sind sie, insbesondere im Vergleich zu den meisten Kunststoffen, sehr temperaturstabil. Nichtsdestoweniger sind auch andere Werkstoffe denkbar, die eine ausreichend hohe Temperaturstabilität, zum Beispiel einen Schmelzpunkt oberhalb mehrerer 100 Grad Celsius, unter Normalbedingungen aufweisen, vorzugsweise oberhalb von 600 Grad Celsius, vorzugsweise oberhalb von 800 Grad Celsius, oder höher. Gleichzeitig ist ein Werkstoff mit einer hohen thermischen Leitfähigkeit vorteilhaft, um schnell Wärme aufnehmen zu können.

In einer weiteren vorteilhaften Ausgestaltung der Erfindung weist der Innenraum der Kammer in der dritten Richtung eine Breite und in der ersten Richtung eine Länge auf, wobei sich die mindestens eine Gaslenkstruktur in der dritten Richtung zumindest über einen Großteil der Breite und/oder in der ersten Richtung zumindest über einen Großteil der Länge des Innenraums erstreckt. Bevorzugt erstreckt sich die mindestens eine Gaslenkstruktur in der dritten Richtung vorzugsweise über zumindest fast die gesamte Breite des Innenraums, zum Beispiel über mindestens 90 Prozent oder 95 Prozent, und in der ersten Richtung vorzugsweise über fast die gesamte Länge des Innenraums, zum Beispiel ebenfalls über mindestens 90 Prozent oder 95 Prozent. Denkbar ist es beispielsweise auch, dass sich die Gaslenkstruktur in der dritten Richtung über die komplette Breite erstreckt und zum Beispiel in direktem Kontakt mit den Kammerwänden steht. Auch in der ersten Richtung ist es denkbar, dass sich die Gaslenkstruktur über die gesamte Länge der Kammer beziehungsweise deren Innenraum erstreckt und zum Beispiel auch mit den gegenüberliegenden Kammerwänden bezüglich der ersten Richtung in Verbindung steht. In diesem Fall schließt die Gaslenkstruktur beispielsweise direkt an eine Eintrittsöffnung und/oder Austrittsöffnung der Kammer an. In diesem Fall ist es vorteilhaft, mehrere solcher Ein- und Austrittsöffnungen vorzusehen, die jeweils in einem Bereich zwischen zwei benachbarten Gaslenkstrukturen münden. Aber auch wenn die Gaslenkstruktur die Kammerwände nicht direkt kontaktiert, lässt sich durch die oben beschriebene Ausgestaltung der Gaslenkstruktur, die sich zumindest nahezu über die gesamte Länge und Breite des Innenraums erstreckt, der Innenraum auf effiziente Weise in einzelne Gasabführpfade gliedern, insbesondere wenn mehrere solche parallel verlaufenden Gaslenkstrukturen vorgesehen sind. Zudem kann der Innenraum der Kammer in der zweiten Richtung eine Höhe aufweisen, wobei sich die Gesamtanordnung der mehreren Gaslenkstrukturen in der zweiten Richtung über den Großteil der Höhe erstreckt, insbesondere über fast die gesamte Höhe. Der Abstand der Gesamtanordnung der Gaslenkstrukturen in der zweiten Richtung von den den Innenraum in der zweiten Richtung begrenzenden Kammerwänden kann maximal so groß oder sogar kleiner sein als ein maximaler Abstand in der zweiten Richtung zwischen zwei in der zweiten Richtung benachbart angeordneter Gaslenkstrukturen.

Erfindungsgemäß sind die mehreren zwischen den Gaslenkstrukturen bereitgestellten Gasabführpfade in einem Gaseintrittsbereich der Kammer und/oder in einem Bereich der Austrittsöffnung fluidisch miteinander gekoppelt. Dies ermöglicht es zum Beispiel, einen gemeinsamen Gaseintrittsbereich und/oder eine einzelne Austrittsöffnung zur Abführung der Gase aus der Kammer zu nutzen. Das über einen gemeinsamen Gaseintrittsbereich der Kammer in die Kammer eingeführte Gas wird dann entsprechend erst nach Einführung in die Kammer in die einzelnen Gasabführpfade aufgeteilt. Analog werden die über die separierten Gasabführpfade geführten Gase im Austrittsbereich, das heißt im Bereich der Austrittsöffnung, wieder zusammengeführt und verlassen gemeinsam diese Austrittsöffnung. Dies vereinfacht den Aufbau der Kammer, ohne ihre Effizienz zu mindern. Außerhalb des Rahmens der vorliegenden Erfindung ist es aber auch denkbar, dass die mehreren zwischen den Gaslenkstrukturen bereitgestellten Gasabführpfade innerhalb des Innenraums der Kammer fluidisch vollständig voneinander getrennt sind. Entsprechend können dann je einem Gasabführpfad eine Eintrittsöffnung und eine Austrittsöffnung der Kammer zugeordnet sein.

Des Weiteren betrifft die Erfindung auch ein Kraftfahrzeug mit einer erfindungsgemäßen Batterieanordnung oder einer ihrer Ausgestaltungen. Die für die erfindungsgemäße Batterieanordnung und ihre Ausgestaltungen beschriebenen Vorteile gelten damit in gleicher Weise für das erfindungsgemäße Kraftfahrzeug.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Des Weiteren betrifft die Erfindung auch ein Verfahren entsprechend dem vorliegenden Anspruch 8 zum Ableiten von Gasen aus einer Batterie mit mindestens einer Batteriezelle mittels eines Zellentgasungskanals, der eine Kammer aufweist, in welcher ein aus der mindestens einen Batteriezelle austretendes Gas eingeleitet wird und durch welche das Gas entlang zumindest eines Gasabführpfades zu mindestens einer Austrittsöffnung der Kammer durchgeführt wird. Dabei weist die Kammer mindestens eine in einem Innenraum der Kammer angeordnete, in einer Hauptverlaufsrichtung, die zu einer ersten Richtung korrespondiert, nicht geradlinig verlaufende Gaslenkstruktur auf, die ein entlang des zumindest einen Gasabführpfads zur Austrittsöffnung geführtes Gas in seinem Verlauf in Hauptverlaufsrichtung mehrfach bezüglich einer zweiten zur ersten senkrechten Richtung umlenkt. Bei dem Gas handelt es sich dabei um das aus der Batteriezelle ausgetretene Gas.

Auch hier gelten die für die erfindungsgemäße Batterieanordnung und ihre Ausgestaltungen beschriebenen Vorteile in gleicher Weise für das erfindungsgemäße Verfahren. Der im Zuge des Verfahrens gemäß der Erfindung verwendete Zellentgasungskanal kann wie zur erfindungsgemäßen Batterieanordnung und ihren Ausgestaltungen beschrieben ausgebildet sein und/oder weitergebildet werden. Gleiches gilt auch für die Kammer, deren Innenraum und die von der Kammer umfassten Gaslenkstrukturen.

Zu der Erfindung gehören auch Weiterbildungen des erfindungsgemäßen Verfahrens, die Merkmale aufweisen, wie sie bereits im Zusammenhang mit den Weiterbildungen der erfindungsgemäßen Batterieanordnung beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

Dabei zeigt die einzige Fig. eine schematische Darstellung einer Batterieanordnung 10 gemäß einem Ausführungsbeispiel der Erfindung. Die Batterieanordnung 10 weist wiederum eine Batterie 12 auf, die in diesem Beispiel mehrere Batteriezellen 14 umfasst. Diese Batteriezellen 14 sind dabei exemplarisch zu einem Batteriemodul 16 zusammengefasst. Dabei kann die Batterie 12 auch mehrere solcher Batteriemodule 16 umfassen. Weiterhin sind die Batteriezellen 14 in diesem Beispiel als prismatische Zellen ausgebildet und in einem Batteriegehäuse 18 angeordnet. Eine jeweilige Batteriezelle 14 weist eine freigebbare Zellentgasungsöffnung 20 auf. Diese kann durch eine Öffnung dem Zellgehäuse der Zellen 14 bereitgestellt sein, die zum Beispiel durch eine Berstmembran im Normalbetrieb verschlossen ist. Im Falle eines Defekts einer Batteriezelle 14, wie in diesem Beispiel einer Batteriezelle 14a, kann sich diese Öffnung 20 durch den in der Zelle 14 entstehenden Überdruck öffnen, wodurch die Zelle 14 kontrolliert ausgasen kann. Um dabei das Gas 22 kontrolliert aus der Batterie 12 und insbesondere aus dem Kraftfahrzeug, in welchem die Batterieanordnung 10 angeordnet ist, abzuführen, weist die Batterieanordnung 10 weiterhin einen Zellentgasungskanal 24 auf. Dieser umfasst eine Kammer 26 mit einem Innenraum 28, in welchen das aus der Zelle 14a austretende Gas 22 einführbar ist und durch welchen dieses eingeführte Gas 22 bis zu einer Austrittsöffnung 30 der Kammer 26 durchführbar ist. In diesem Beispiel weist der Zellentgasungskanal 24 noch einen weiteren Kanalabschnitt 32 auf, in welchen das aus den Zellen 14 austretende Gas 22 einführbar ist und über welchen das in diesen Kanalabschnitt 32 eingeführte Gas 22 in die fluidisch mit diesem Kanalabschnitt 32 gekoppelte Kammer 26 einführbar ist. Denkbar wäre es jedoch auch, auf diesen zusätzlichen Kanalabschnitt 32 zu verzichten und die Kammer 26 so mit der Batterie 12 zu koppeln, dass das aus den Zellen 14 austretende Gas 22 auch direkt in die Kammer 26 beziehungsweise in den Innenraum 28 eingeführt werden kann. Die Kammer 26 kann also als separates Gehäuse, zum Beispiel pro Modul 16 oder pro Batterie 12, bereitgestellt sein und weiterhin ist die Ausführung der Kammer 26 auch als Verlängerung des Gaskanals 32 denkbar.

Das in die Kammer 26 im vorliegenden Beispiel eingeführte Gas 22 ist sehr heiß und vorliegend als heißes Gas 22a bezeichnet und weist zudem zahlreiche Partikel 34 auf. Dabei sind nur exemplarisch einige dieser Partikel 34 aus Gründen der Übersichtlichkeit mit einem Bezugszeichen versehen. Das aus der Austrittsöffnung 30 austretende kühlere Gas ist mit 22b bezeichnet. Durch das Durchlaufen der Kammer 26 wird vorliegend eine deutliche Abkühlung des Gases 22 bewirkt, sowie zusätzlich auch eine deutliche Reduktion der Anzahl der im Gas 22 enthaltenen Partikel 34. Dies lässt sich nun vorteilhafterweise dadurch bewerkstelligen, dass die Kammer 26 mehrere im Innenraum 28 der Kammer 26 angeordnete Gaslenkstrukturen 36 aufweist. Auch hier sind wiederum nur einige aus Gründen der Übersichtlichkeit mit einem Bezugszeichen versehen. Diese Gaslenkstrukturen 36 sind als eine Art Trennwände im Innenraum 28 angeordnet. Weiterhin verläuft eine jeweilige Gaslenkstruktur 36 in eine Hauptverlaufsrichtung, die vorliegend zur dargestellten x-Richtung korrespondiert. In dieser Hauptverlaufsrichtung x verlaufen die jeweiligen Gaslenkstrukturen 36 zudem nicht geradlinig, sondern im vorliegenden Beispiel zick-zack-förmig. Alternativ könnten diese auch wellenförmig oder schlangenförmig verlaufen. Zwischen je zwei in y-Richtung unmittelbar nebeneinander angeordnete Gaslenkstrukturen 36 ist somit ein jeweiliger Gasabführpfad 38 gebildet, der in seinem Verlauf in Hauptverlaufsrichtung x bedingt durch die geometrische Ausbildung der Gasablenkstrukturen 36 einen mehrfachen Richtungswechsel bezüglich einer zweiten zur ersten senkrechten Richtung aufweist, wobei diese zweite Richtung vorliegend zur dargestellten y-Richtung korrespondiert. Exemplarisch ist in der Figur ein entlang eines Gasabführpfads 36 verlaufender Gasstrom 40 veranschaulicht, wobei dieser Richtungswechsel durch die in x-Richtung alternierend in und entgegen y-Richtung weisenden Pfeile 42 illustriert ist. Diese Pfeile 42 korrespondieren insbesondere zur aktuellen Strömungsrichtung des Gasstroms 40 an den entsprechenden Positionen innerhalb des Gasabführpfads 38.

Durch die mehrfache Umlenkung des Gasstroms 40, der entlang eines solchen Gasabführpfads 38 strömt, kann eine Abbremsung dieses Gasstroms 40 und eine damit einhergehende Abkühlung des Gasstroms erreicht werden, sowie eine zusätzliche Abkühlung dadurch, dass dieser Gasstrom 40 Wärme an diese Gaslenkstrukturen 36 abgibt, die sich damit einhergehend erwärmen. Diese sind daher vorzugsweise aus einem möglichst temperaturbeständigen Material gebildet, das vorzugsweise auch dazu ausgebildet ist, möglichst schnell Wärme aufzunehmen. Besonders vorteilhaft ist die Ausbildung aus einem Metall oder einer Legierung. Entsprechend können die Gaslenkstrukturen 36 zum Beispiel als zick-zack-förmig ausgebildete Bleche bereitgestellt sein, die insbesondere eine gleiche Geometrie aufweisen und wie in der Figur dargestellt zum Beispiel parallel zueinander angeordnet sind. Dadurch können mehrere parallel zueinander verlaufende Gasabführpfade 38 bereitgestellt werden. Dadurch, dass der Gasstrom 40 bedingt durch die mehrfache Umlenkung auch mehrfach mit den Wänden dieser Gaslenkstrukturen 36 kollidiert, kommt es zu einer vermehrten Partikelabscheidung, insbesondere an den Wänden dieser Gaslenkstrukturen 36. Dadurch, dass mehrere solche Gaslenkstrukturen 36 in einer gemeinsamen Kammer 26 angeordnet sind, können die einzelnen Gasabführpfade 38 relativ eng ausgestaltet werden, was für die Partikelabscheidung, Abbremsung und Abkühlung des Gasstroms 40 förderlich ist, ohne dabei das durchströmbare Gesamtvolumen zu reduzieren. Dieses kann insbesondere weiterhin sehr groß gehalten werden, sodass zum Beispiel auch eine zusätzliche Gasabkühlung durch Expansion bei Eintritt in die Kammer 26 erreicht werden kann. Letztendlich tritt durch die Austrittsöffnung 30 ein abgekühltes Schadgas 22b mit wenig oder sogar ohne Partikel 34 aus. Dieses austretende Gemisch 22b kann sich aufgrund seiner niedrigen Temperatur und der wenigen darin enthaltenen Partikel nicht mehr selbst entzünden. Das in die Umgebung 44 austretende Gas 22b ist hinsichtlich seines Gefahrenpotentials damit deutlich entschärft. Die Austrittsöffnung 30 kann in Bezug auf das Kraftfahrzeug, in welchem die Batterieanordnung 10 Anwendung findet, so positioniert sein, dass das austretende Gas 22b in eine Umgebung 44 des Kraftfahrzeugs ausleitbar ist. Alternativ kann sich an diese Austrittsöffnung 30 noch ein weiterer Teil des Zellentgasungskanals 24 anschließen, der das abgekühlte Gas 22b bis zur finalen Austrittsöffnung leiten, die in einer Umgebung 44 des Kraftfahrzeugs mündet.

Insgesamt zeigen die Beispiele, wie eine Funkenfalle für Batteriesysteme bereitgestellt werden kann. Durch entsprechende Gestaltung eines Gaskanals als Kammer oder die Einleitung des Schadgases in ein Extravolumen als Kammer wird die Temperatur des Gases gesenkt, sodass es bei Austritt aus dem System nicht zur Selbstentzündung des Gases kommt. Dabei kann die Austrittstemperatur des Schadgases und der darin enthaltenen Partikel durch die von der Kammer umfassten Gaslenkstrukturen so weit reduziert werden, dass ein Austreten einer Flamme aus dem Batteriesystem beziehungsweise eine Selbstentzündung des Gases außerhalb der Batterie ausgeschlossen werden kann. Bevorzugt werden zur Bereitstellung der Gaslenkstrukturen mehrere speziell gebogene Bleche nebeneinander in den Innenraum der beschriebenen Kammer gestellt und das Schadgas wird zwischen diesen hindurchgeführt. Durch die spezielle Gestaltung wird der Gasstrom immer wieder umgelenkt und die Partikel an die Wände geschleudert. Ein direktes Durchströmen ohne Umlenkung wird dabei durch die Geometrie dieser Bleche, die vorliegend als Gaslenkstrukturen bezeichnet sind, ausgeschlossen. Die Wärme des Gases und der Partikel wird dabei an die Bleche abgegeben. Durch die Reduzierung der Strömungsgeschwindigkeit und die Umlenkung des Gasstroms werden dabei ebenfalls Partikel abgeschieden.

## Patentansprüche

1. Batterieanordnung (10) mit einer Batterie (12) und einem Zellentgasungskanal (24) zum Abführen von Gasen (22) aus einer der Batterie (12), die mindestens eine Batteriezelle (18) umfasst,
- wobei der Zellentgasungskanal (24) eine Kammer (26) aufweist, die derart ausgestaltet ist, dass ein aus der mindestens einen Batteriezelle (18) austretendes Gas (22) in diese einleitbar ist und durch diese entlang zumindest eines Gasabführpfads (38) zu mindestens einer Austrittsöffnung (30) der Kammer (26) durchführbar ist,
- wobei die Kammer (26) mindestens eine in einem Innenraum (28) der Kammer (26) angeordnete, in einer Hauptverlaufsrichtung (x), die zur einer ersten Richtung (x) korrespondiert, nicht geradlinig verlaufende Gaslenkstruktur (36) aufweist, die so ausgebildet ist, dass der zumindest eine Gasabführpfad (38) in seinem Verlauf in Hauptverlaufsrichtung (x) einen mehrfachen Richtungswechsel bezüglich einer zweiten zur ersten senkrechten Richtung (y) aufweist,
**dadurch gekennzeichnet, dass**
- die Kammer (26) im Innenraum (28) mehrere Gaslenkstrukturen (36) umfassend die mindestens eine Gaslenkstruktur (36) aufweist, so dass mehrere zumindest bereichsweise durch die Gaslenkstrukturen separierte Gasabführpfade bereitgestellt sind,
- wobei die mehreren Gaslenkstrukturen (36) in der Hauptverlaufsrichtung (x) nicht geradlinig verlaufen, so dass zwischen je zwei in der zweiten Richtung (y) benachbart angeordneten Gaslenkstrukturen (36) der mehreren Gaslenkstrukturen (36) ein Gasabführpfad der mehreren Gasabführpfade bereitgestellt ist, der in seinem Verlauf in Hauptverlaufsrichtung (x) einen mehrfachen Richtungswechsel bezüglich einer zweiten zur ersten senkrechten Richtung (y) aufweist, und
- wobei die mehreren zwischen den Gaslenkstrukturen (36) bereitgestellten Gasabführpfade in einem Gaseintrittsbereich der Kammer (26) und/oder im Bereich der Austrittsöffnung (30) fluidisch miteinander gekoppelt sind.

2. Batterieanordnung (10) nach Anspruch 1,
**dadurch gekennzeichnet, dass**
die mindestens eine Gaslenkstruktur (36) in Hauptverlaufsrichtung (x) zick-zack-förmig oder wellenförmig verläuft.

3. Batterieanordnung (10) nach einem der vorhergehenden Ansprüche,
**dadurch gekennzeichnet, dass**
die mehreren Gaslenkstrukturen (36) gleichartig ausgebildet und parallel zueinander angeordnet sind.

4. Batterieanordnung (10) nach einem der vorhergehenden Ansprüche,
**dadurch gekennzeichnet, dass**
die mindestens eine Gaslenkstruktur (36) in einer dritten Richtung (z), die zur ersten und zweiten Richtung (x, y) senkrecht ist, gerade verlaufend ausgebildet ist.

5. Batterieanordnung (10) nach einem der vorhergehenden Ansprüche,
**dadurch gekennzeichnet, dass**
die mindestens eine Gaslenkstruktur (36) aus einem metallischen Werkstoff gebildet ist.

6. Batterieanordnung (10) nach einem der vorhergehenden Ansprüche,
**dadurch gekennzeichnet, dass**
der Innenraum (28) der Kammer (26) in einer dritten Richtung (z) eine Breite und in der ersten Richtung (x) eine Länge aufweist, und sich die mindestens eine Gaslenkstruktur (36) in der dritten Richtung (z) zumindest über einen Großteil der Breite des Innenraums (28) und/oder in der ersten Richtung (x) zumindest über einen Großteil der Länge des Innenraums (28) erstreckt.

7. Kraftfahrzeug mit einer Batterieanordnung (10) nach einem der vorhergehenden Ansprüche.

8. Verfahren zum Ableiten von Gasen (22) aus einer Batterie (12) mit mindestens einer Batteriezelle (18) mittels eines Zellentgasungskanals (24), der eine Kammer (26) aufweist, in welche ein aus der mindestens einen Batteriezelle (18) austretendes Gas (22) eingeleitet wird und durch welche das Gas (22) entlang zumindest eines Gasabführpfads (38) zu mindestens einer Austrittsöffnung (30) der Kammer (26) durchgeführt wird,
- wobei die Kammer (26) mindestens eine in einem Innenraum (28) der Kammer (26) angeordnete, in einer Hauptverlaufsrichtung (x), die zur einer ersten Richtung (x) korrespondiert, nicht geradlinig verlaufende Gaslenkstruktur (36) aufweist, die ein entlang des zumindest einen Gasabführpfads (38) zur Austrittöffnung geführtes Gas (22) in seinem Verlauf in Hauptverlaufsrichtung (x) mehrfach bezüglich einer zweiten zur ersten senkrechten Richtung (y) umlenkt;
**dadurch gekennzeichnet, dass**
- die Kammer (26) im Innenraum (28) mehrere Gaslenkstrukturen (36) umfassend die mindestens eine Gaslenkstruktur (36) aufweist, so dass mehrere zumindest bereichsweise durch die Gaslenkstrukturen separierte Gasabführpfade bereitgestellt sind,
- wobei die mehreren Gaslenkstrukturen (36) in der Hauptverlaufsrichtung (x) nicht geradlinig verlaufen, so dass zwischen je zwei in der zweiten Richtung (y) benachbart angeordneten Gaslenkstrukturen (36) der mehreren Gaslenkstrukturen (36) ein Gasabführpfad der mehreren Gasabführpfade bereitgestellt ist, der in seinem Verlauf in Hauptverlaufsrichtung (x) einen mehrfachen Richtungswechsel bezüglich einer zweiten zur ersten senkrechten Richtung (y) aufweist, und
- wobei die mehreren zwischen den Gaslenkstrukturen (36) bereitgestellten Gasabführpfade
• in einem Gaseintrittsbereich der Kammer (26) fluidisch miteinander gekoppelt sind, so dass das über den gemeinsamen Gaseintrittsbereich der Kammer in die Kammer eingeführte Gas dann erst nach Einführung in die Kammer in die einzelnen Gasabführpfade aufgeteilt wird; und/oder
• im Bereich der Austrittsöffnung (30) fluidisch miteinander gekoppelt sind, so dass über die separierten Gasabführpfade geführte Gase im Bereich der Austrittsöffnung zusammengeführt werden und die Austrittsöffnung gemeinsam verlassen.

## Claims

1. Battery assembly (10) with a battery (12) and a cell degassing channel (24) for discharging gases (22) from the battery (12), which comprises at least one battery cell (18),
- wherein the cell degassing channel (24) has a chamber (26), which is configured such that a gas (22) emerging from the at least one battery cell (18) can be introduced into it and can be guided through it along at least one gas discharge path (38) to at least one outlet opening (30) of the chamber (26),
- wherein the chamber (26) has at least one gas guiding structure (36) arranged in an interior (28) of the chamber (26) and not extending in a straight line in a main direction (x) which corresponds to a first direction (x), which gas guiding structure is configured such that the at least one gas discharge path (38) has multiple changes in direction over its course in the main direction (x) with respect to a second direction (y) perpendicular to the first direction,
**characterized in that**
- the chamber (26) in the interior (28) has a plurality of gas guiding structures (36) comprising the at least one gas guiding structure (36), so that a plurality of gas discharge paths separated at least in some sections by the gas guiding structures are provided,
- wherein the plurality of gas guiding structures (36) do not extend straight in the main direction (x), so that between two gas guiding structures (36) of the plurality of gas guiding structures (36) arranged adjacent to one another in the second direction (y) a gas discharge path of the plurality of gas discharge paths is provided, which over its course in the main direction (x) has multiple changes in direction with respect to a second direction (y) perpendicular to the first direction, and
- wherein the plurality of gas discharge paths provided between the gas guiding structures (36) are coupled fluidically to one another in a gas inlet region of the chamber (26) and/or in the region of the outlet opening (30).

2. Battery assembly (10) according to claim 1,
**characterized in that**
the at least one gas guiding structure (36) extends in a zigzag or wave shape in the main direction (x).

3. Battery assembly (10) according to any one of the preceding claims,
**characterized in that**
the plurality of gas guiding structures (36) are configured to be the same and are arranged to be parallel to one another.

4. Battery assembly (10) according to any one of the preceding claims,
**characterized in that**
the at least one gas guiding structure (36) is configured to extend straight in a third direction (z), which is perpendicular to the first and second directions (x, y).

5. Battery assembly (10) according to any one of the preceding claims,
**characterized in that**
the at least one gas guiding structure (36) is made from a metallic material.

6. Battery assembly (10) according to any one of the preceding claims,
**characterized in that**
the interior (28) of the chamber (26) has a width in a third direction (z) and a length in the first direction (x), and the at least one gas guiding structure (36) extends in the third direction (z) at least over a large part of the width of the interior (28) and/or in the first direction (x) at least over a large part of the length of the interior (28).

7. Motor vehicle with a battery assembly (10) according to any one of the preceding claims.

8. Method for discharging gases (22) from a battery (12) with at least one battery cell (18) by means of a cell degassing channel (24), which has a chamber (26) into which a gas (22) emerging from the at least one battery cell (18) is introduced and through which the gas (22) is guided along at least one gas discharge path (38) to at least one outlet opening (30) of the chamber (26),
- wherein the chamber (26) has at least one gas guiding structure (36) arranged in an interior (28) of the chamber (26) and not extending in a straight line in a main direction (x) which corresponds to a first direction (x), which gas guiding structure deflects a gas (22) guided along the at least one gas discharge path (38) to the outlet opening multiple times over its course in the main direction (x) with respect to a second direction (y) perpendicular to the first direction;
**characterized in that**
- the chamber (26) in the interior (28) has a plurality of gas guiding structures (36) comprising the at least one gas guiding structure (36), so that a plurality of gas discharge paths separated at least in some sections by the gas guiding structures are provided,
- wherein the plurality of gas guiding structures (36) do not extend straight in the main direction (x), so that between two gas guiding structures (36) of the plurality of gas guiding structures (36) arranged adjacent to one another in the second direction (y) a gas discharge path of the plurality of gas discharge paths is provided, which over its course in the main direction (x) has multiple changes in direction with respect to a second direction (y) perpendicular to the first direction, and
- wherein the plurality of gas discharge paths provided between the gas guiding structures (36)
- are coupled fluidically to one another in a gas inlet region of the chamber (26), so that the gas introduced into the chamber via the common gas inlet region of the chamber is then divided into the individual gas discharge paths only after introduction into the chamber; and/or
- are coupled fluidically to one another in the region of the outlet opening (30), so that gases guided through the separated gas discharge paths are brought together in the region of the outlet opening and leave the outlet opening together.

## Revendications

1. Ensemble de batterie (10) avec une batterie (12) et un canal de dégazage de cellule (24) pour l'évacuation de gaz (22) d'une batterie (12) qui comprend au moins une cellule de batterie (18),
- dans lequel le canal de dégazage de cellule (24) présente une chambre (26) qui est configurée de telle manière qu'un gaz (22) sortant de l'au moins une cellule de batterie (18) puisse être introduit dans celle-ci et puisse passer par celle-ci le long d'au moins un chemin d'évacuation de gaz (38) vers au moins une ouverture de sortie (30) de la chambre (26),
- dans lequel la chambre (26) présente au moins une structure de direction de gaz (36) agencée dans un espace intérieur (28) de la chambre (26), s'étendant de manière non linéaire dans un sens d'étendue principale (x) qui correspond à un premier sens (x), structure qui est formée de sorte que l'au moins un chemin d'évacuation de gaz (38) présente dans son étendue dans le sens d'étendue principale (x) un changement de sens multiple par rapport à un deuxième sens (y) perpendiculaire au premier,
**caractérisé en ce que**
- la chambre (26) présente dans l'espace intérieur (28) plusieurs structures de direction de gaz (36) comprenant l'au moins une structure de direction de gaz (36) de sorte que plusieurs chemins d'évacuation de gaz séparés au moins par endroits par les structures de direction de gaz soient fournis,
- dans lequel les plusieurs structures de direction de gaz (36) s'étendent de manière non linéaire dans le sens d'étendue principale (36) de sorte qu'un chemin d'évacuation de gaz des plusieurs chemins d'évacuation de gaz soit fourni entre deux structures de direction de gaz (36) agencées de manière contigüe dans le deuxième sens (y), chemin qui présente dans son étendue dans le sens d'étendue principale (x) un changement de sens multiple par rapport à un deuxième sens (y) perpendiculaire au premier, et
- dans lequel les plusieurs chemins d'évacuation de gaz fournis entre les structures de direction de gaz (36) sont couplés les uns aux autres de manière fluidique dans une zone d'entrée de gaz de la chambre (26) et/ou dans la zone de l'ouverture de sortie (30).

2. Ensemble de batterie (10) selon la revendication 1,
**caractérisé en ce que**
l'au moins une structure de direction de gaz (36) s'étend dans le sens d'étendue principale (x) en forme de zigzag ou d'onde.

3. Ensemble de batterie (10) selon l'une quelconque des revendications précédentes,
**caractérisé en ce que**
les plusieurs structures de direction de gaz (36) sont formées de manière identique et sont agencées parallèlement les unes aux autres.

4. Ensemble de batterie (10) selon l'une quelconque des revendications précédentes,
**caractérisé en ce que**
l'au moins une structure de direction de gaz (36) est formée s'étendant en ligne droite dans un troisième sens (z) qui est perpendiculaire au premier et deuxième sens (x, ^{y}).

5. Ensemble de batterie (10) selon l'une quelconque des revendications précédentes,
**caractérisé en ce que**
l'au moins une structure de direction de gaz (36) est formée en un matériau métallique.

6. Ensemble de batterie (10) selon l'une quelconque des revendications précédentes,
**caractérisé en ce que**
l'espace intérieur (28) de la chambre (26) dans un troisième sens (z) présente une largeur et dans le premier sens (x) une longueur, et l'au moins une structure de direction de gaz (36) s'étend dans le troisième sens (z) au moins sur une grande partie de la largeur de l'espace intérieur (28) et/ou dans le premier sens (x) au moins sur une grande partie de la longueur de l'espace intérieur (28).

7. Véhicule automobile avec un ensemble de batterie (10) selon l'une quelconque des revendications précédentes.

8. Procédé d'évacuation de gaz (22) d'une batterie (12) avec au moins une cellule de batterie (18) au moyen d'un canal de dégazage de cellule (24) qui présente une chambre (26), dans laquelle un gaz (22) sortant de l'au moins une cellule de batterie (18) est introduit et par laquelle le gaz (22) passe le long d'au moins un chemin d'évacuation de gaz (38) vers au moins une ouverture de sortie (30) de la chambre (26),
- dans lequel la chambre (26) présente au moins une structure de direction de gaz (36) agencée dans un espace intérieur (28) de la chambre (26), s'étendant de manière non linéaire dans un sens d'étendue principale (x) qui correspond à un premier sens (x), structure qui dévie un gaz (22) guidé le long de l'au moins un chemin d'évacuation de gaz (38) vers l'ouverture de sortie dans son étendue dans le sens d'étendue principale (x) de manière multiple par rapport à un deuxième sens (y) perpendiculaire au premier ;
**caractérisé en ce que**
- la chambre (26) présente dans l'espace intérieur (28) plusieurs structures de direction de gaz (36) comprenant l'au moins une structure de direction de gaz (36) de sorte que plusieurs chemins d'évacuation de gaz séparés au moins par endroits par les structures de direction de gaz soient fournis,
- dans lequel les plusieurs structures de direction de gaz (36) s'étendent de manière non linéaire dans le sens d'étendue principale (x) de sorte qu'un chemin d'évacuation de gaz des plusieurs chemins d'évacuation de gaz soit fourni entre deux structures de direction de gaz (36) agencées de manière contigüe dans le second sens (y), chemin qui présente dans son étendue dans le sens d'étendue principale (x) un changement de sens multiple par rapport à un second sens (y) perpendiculaire au premier, et
- dans lequel les plusieurs chemins d'évacuation de gaz fournis entre les structures de direction de gaz (36)
- sont couplés entre eux de manière fluidique dans une zone d'entrée de gaz de la chambre (26) de sorte que le gaz introduit dans la chambre par le biais de la zone d'entrée de gaz commune de la chambre soit réparti seulement après l'introduction dans la chambre dans les chemins d'évacuation de gaz individuels ; et/ou
- sont couplés entre eux de manière fluidique dans la zone de l'ouverture de sortie (30) de sorte que des gaz guidés par le biais des chemins d'évacuation de gaz séparés soient réunis dans la zone de l'ouverture de sortie et quittent ensemble l'ouverture de sortie.
